# FASCICULE DE BREVET EUROPEEN

(11) **EP 3 991 002 B1**
(45) Date de publication et mention de la délivrance du brevet: **02.07.2025**
(21) Numéro de dépôt: 20747034.5
(22) Date de dépôt: 24.06.2020
(51) Int. Cl.: G05D 23/19

(54) **DISPOSITIF DE COMMANDE POUR UN SYSTÈME DE CHAUFFAGE D'UN FLUIDE**
STEUERVORRICHTUNG FÜR EIN FLUIDHEIZSYSTEM
CONTROL DEVICE FOR A FLUID HEATING SYSTEM

(30) Priorité: 28.06.2019 FR 1907080
(43) Date de publication de la demande: 04.05.2022
(73) Titulaire: VALEO SYSTEMES THERMIQUES, 78320 Le Mesnil Saint-Denis (FR)
(72) Inventeur: FOURNIER, Jonathan, 78320 LE MESNIL SAINT-DENIS (FR); CARLICCHI, Rémi, 78320 LE MESNIL SAINT-DENIS (FR)
(74) Mandataire: Valeo Systèmes Thermiques
(86) Numéro de dépôt international: PCT/FR2020/051101
(87) Numéro de publication internationale: WO 2020/260824

(56) Documents cités:
- DE-A1- 102013 102 465
- GB-A- 2 479 088

## Description

### Domaine technique

L'invention concerne un dispositif de commande pour système de chauffage d'un fluide, de préférence liquide, pour véhicule automobile, notamment électrique ou hybride.

### Technique antérieure

De façon connue, un tel système de chauffage d'un fluide, de préférence liquide, comprend un élément électrique chauffant et une chambre conformée pour que le fluide soit chauffé par ledit élément électrique dans la chambre.

Le dispositif de commande de l'élément électrique chauffant inclut généralement au moins un transistor de puissance, alimenté par une tension haute et dont une grille est pilotée par un circuit alimenté par une tension basse. La tension haute est par exemple de l'ordre de 350 V tandis que la tension basse est de l'ordre de 12 V.

En cas de défaillance du transistor de puissance, le dispositif de chauffage peut fonctionner en permanence, ce qui engendre, lorsque l'eau entre en ébullition et s'évapore, un risque d'incendie qui n'est pas acceptable, en particulier au vu de la norme ISO 26262.

Le but de la présente invention est de remédier à cet inconvénient.

GB2479088A et DE102013102465A1 divulguent des systèmes de contrôle de dispositifs de chauffage de fluides.

### Résumé

L'invention est exposée dans le jeu de revendications.

Il est proposé un dispositif de commande d'un système de chauffage d'un fluide, de préférence un fluide liquide, pour un véhicule automobile, comprenant au moins un élément électrique chauffant configuré pour chauffer ledit fluide, le dispositif de commande comprenant un premier interrupteur électronique apte à être connecté à l'élément électrique chauffant et un deuxième interrupteur électronique apte à être connecté à l'élément électrique chauffant, un capteur de mesure d'une première température et un microcontrôleur associés au premier interrupteur électronique, le microcontrôleur étant configuré pour ouvrir ou fermer le premier interrupteur selon la valeur de première température mesurée, un capteur de mesure d'une deuxième température et un module de contrôle logique associés au deuxième interrupteur électronique et comprenant un comparateur agencé pour comparer la deuxième température mesurée à un seuil, le module étant configuré pour ouvrir ou fermer le deuxième interrupteur selon le résultat de la comparaison.

Selon un autre aspect, le module est configuré pour ouvrir le deuxième interrupteur électronique si la deuxième température est supérieure à un seuil.

Selon un autre aspect, le module comprend un coupleur numérique de liaison entre le microcontrôleur et le module de contrôle logique, configuré pour communiquer la deuxième température mesurée au microcontrôleur et/ou pour activer ou désactiver le deuxième interrupteur électronique.

Selon un autre aspect, le microcontrôleur est configuré pour ouvrir le premier interrupteur électronique si une valeur absolue d'une différence entre les valeurs des première et deuxième températures mesurées est supérieure à un seuil.

Selon un autre aspect, le module de contrôle logique comprend un autre comparateur pour comparer la première température à une valeur seuil, et étant configuré pour ouvrir le deuxième interrupteur électronique si la première température est supérieure à un seuil.

Selon un autre aspect, le module de contrôle logique comprend un moyen de cohérence des première et deuxième températures configuré pour ouvrir le deuxième interrupteur électronique si la première température est différente de la deuxième température.

Selon un autre aspect, le dispositif comprend une alimentation à découpage.

Selon un autre aspect, il est proposé un système de chauffage d'un fluide, notamment liquide, comprenant un élément électrique chauffant et un dispositif de commande tel que décrit précédemment.

### Brève description des dessins

D'autres caractéristiques, détails et avantages apparaîtront à la lecture de la description détaillée ci-après, et à l'analyse des dessins annexés, sur lesquels :
La Fig. 1 illustre schématiquement un dispositif de commande d'un système de chauffage selon un premier mode de réalisation.
La Fig. 2 illustre schématiquement un comparateur du dispositif de commande de la figure 1.
La Fig. 3 illustre schématiquement un dispositif de commande d'un système de chauffage selon un deuxième mode de réalisation.
La Fig. 4 illustre schématiquement un dispositif de commande d'un système de chauffage selon un troisième mode de réalisation.
La Fig. 5 illustre le dispositif de commande de la figure 4 selon une première variante.
La Fig. 6 illustre un dispositif de commande de la figure 4 selon une deuxième variante.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Dans la suite de la description, les éléments identiques ou de fonction identique portent le même signe de référence. À fin de concision de la présente description, ces éléments ne sont pas décrits en détails dans chaque mode de réalisation. Au contraire, seules les différences entre les variantes de réalisation sont décrites en détails.

Comme visible sur les figures, l'invention a pour objet un dispositif de commande 1 pour un système de chauffage d'un fluide 100, de préférence un fluide liquide, pour un véhicule automobile.

Le système de chauffage 100 comprend un élément électrique chauffant, 101. L'élément chauffant 101 est avantageusement un tube cylindrique chauffant comprenant une résistance chauffante R de type piste sérigraphiée, de type résistance blindée ou de type à coefficient de température positif.

Le système de chauffage 100 comprend également une chambre 102 dans laquelle circule le fluide liquide F, par exemple de l'eau glycolée, et dans laquelle est plongé l'élément chauffant 101, de sorte que le fluide F est chauffé par l'élément électrique chauffant 101 dans la chambre 102.

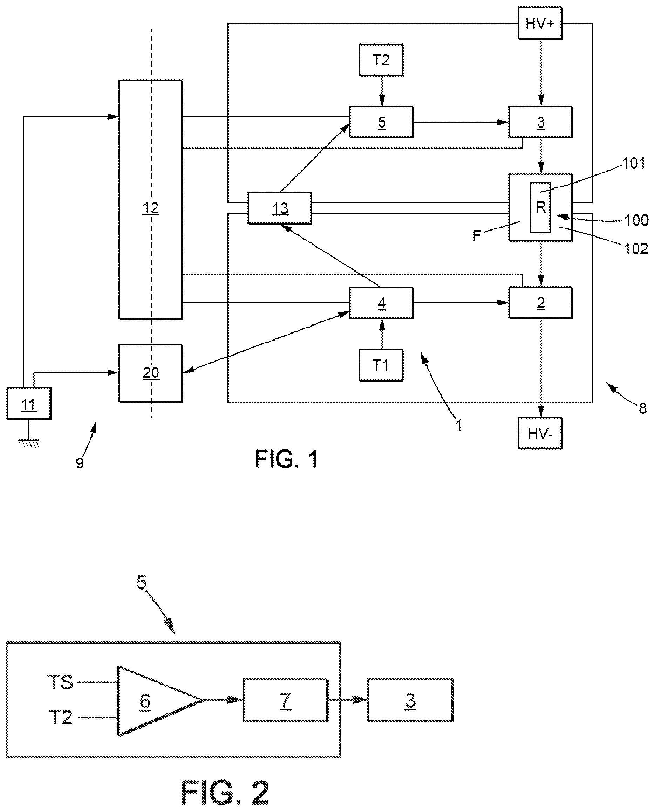

Le premier mode de réalisation est décrit en relation avec les figures 1 et 2.

Comme visible sur la figure 1, le dispositif de commande 1 comprend un premier interrupteur électronique 2 et un deuxième interrupteur électronique 3.

De préférence, le premier et le deuxième interrupteurs 2, 3 sont des transistors de puissance de type bipolaire à grille isolée, dits IGBT (pour Insulated Gate Bipolar Transistor, en anglais).

Le dispositif de commande 1 comprend également un microcontrôleur 4 associé au premier interrupteur 2 et configuré pour ouvrir ou fermer le premier interrupteur 2.

Par exemple, le microcontrôleur 4 applique une tension dite basse, notamment de l'ordre de 12V, à la grille du transistor 2 pour fermer le transistor 2 et une tension nulle pour ouvrir le transistor 2.

Le dispositif de commande 1 comprend également un capteur de température, par exemple de type PTC ou NTC, pour mesurer une première température T1. La température T1 est mesurée dans la chambre 102 ou à proximité de celle-ci afin de déterminer directement ou indirectement la température du fluide circulant dans le système de chauffage 100.

Le microcontrôleur 4 est configuré pour ouvrir le transistor 2 quand T1 est supérieure à une valeur seuil.

Comme il ressort également des figures 1 et 2, le dispositif de commande 1 comprend un module 5 de contrôle logique du deuxième interrupteur 3.

On note que le module de contrôle logique 5 se distingue d'un microcontrôleur en ce qu'il comprend moins d'étapes de traitement du signal. En particulier, le module ne comporte pas de convertisseur analogique/numérique. De plus, il existe une connexion directe de la source de courant au(x) comparateur(s) dont il est muni, comme il va être détaillé. Le module de contrôle logique n'a que la fonction pour laquelle il est conçu, contrairement au microcontrôleur qui fonctionne selon sa programmation (avec le « software », en anglais).

Le module de contrôle logique 5 permet, contrairement à l'art antérieur, de faire une redondance de sécurité en se passant d'un deuxième microcontrôleur. Ainsi, on élimine certaines étapes de traitement du signal, ce qui confère au dispositif de commande une plus grande robustesse.

Le module 5 comprend un comparateur 6 agencé pour comparer une deuxième température T2 mesurée à un seuil, et un moyen de commande 7 de la grille du transistor 3 connecté au comparateur 5 et configuré pour ouvrir ou fermer le deuxième interrupteur 3 selon le résultat de la comparaison.

Le dispositif de commande 1 comprend également un capteur de température, par exemple de type PTC ou NTC, pour mesurer la deuxième température T2. La température T2 est mesurée dans la chambre 102 ou à proximité de celle-ci afin de déterminer directement ou indirectement la température du fluide circulant dans le système de chauffage 100.

Le moyen de commande de grille 7 est configuré pour ouvrir le transistor 3 quand T2 est supérieure à une valeur seuil.

Comme également visible sur la figure 1, les transistors 2, 3 sont reliés en série à l'élément électrique chauffant 101 entre deux potentiels notés HV+ et HV- (pour High Voltage, tension élevée, en anglais), formant un circuit dit de tension élevée 8. La tension HV+ est par exemple de l'ordre de 350V.

Comme illustré sur la figure 1, le dispositif de commande 1 comprend un circuit basse tension 9 comportant une alimentation à découpage de type dit « flyback » comportant de manière connue un transformateur 12 connecté à une source électrique 11, et permettant d'alimenter électriquement le microcontrôleur 4, le module 5, et les transistors 2 et 3.

La source électrique est dite basse tension, et fournit une tension comprise entre 5V et 20V, par exemple 12V ou 15V.

Comme également illustré sur la figure 1, le dispositif de commande 1 comprend également un coupleur numérique 13 entre le microcontrôleur 4 et le module 5.

Selon ce premier mode de réalisation, le coupleur numérique 13 assure la communication entre le microcontrôleur 4 et le module 5, de sorte que le microcontrôleur 4 pilote l'activation du deuxième transistor 3 via le module 5. Pour ce faire, le module comprend une logique ET entre le signal de la température T2 et un signal marche/arrêt envoyé par le microcontrôleur 4 via le coupleur 13.

Ainsi, en cas de défaillance, la température T1 et/ou la température T2 devient supérieure à la valeur seuil et le premier transistor 2 et/ou le deuxième transistor 3 s'ouvre, grâce respectivement au microcontrôleur 4 et au module 5, ce qui permet d'éviter tout risque d'incendie.

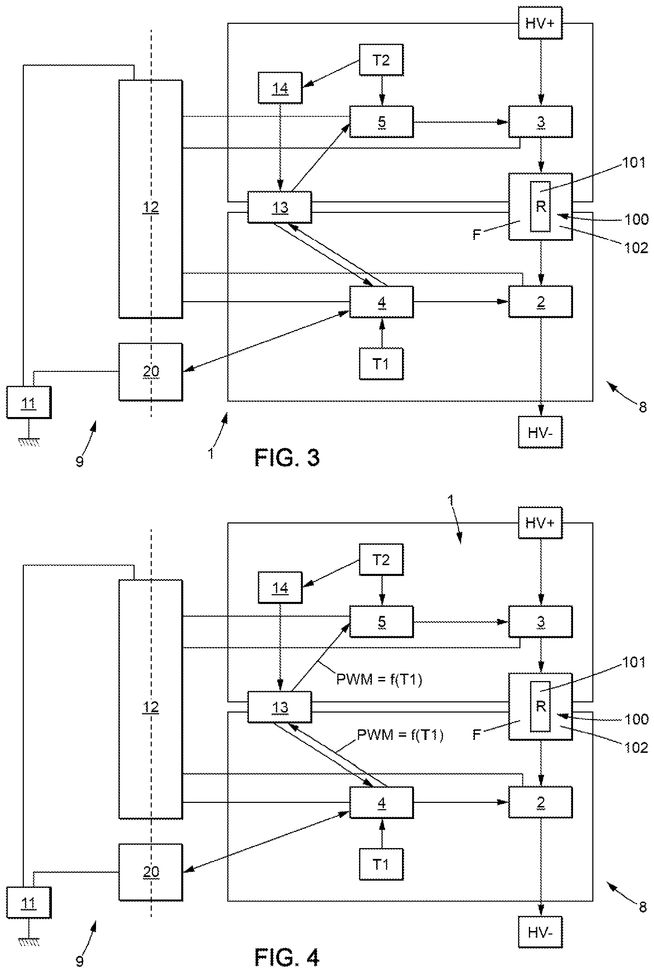

Le deuxième mode de réalisation est décrit en relation avec la figure 3.

Les éléments 1 à 13 du dispositif de commande 1 du deuxième mode de réalisation ont déjà été décrits en relation avec la figure 1. Les éléments 100-102 du système de chauffage ont également déjà été décrits.

Comme il ressort de la figure 3, le dispositif de commande 1 comprend un convertisseur analogique numérique 14 pour transmettre la température T2 au microcontrôleur 4 via le coupleur numérique 13. Le bus physique peut être un I2C (pour Inter-Integrated Circuit, en anglais) ou SPI (pour Serial Peripheral Interface, en anglais).

Avantageusement, dans ce cas, le microcontrôleur 4 peut être configuré pour vérifier la cohérence des températures T1 et T2 et pour ouvrir le premier transistor 2 si T1 et T2 ne sont pas cohérentes (leur différence étant supérieure, en valeur absolue, à un seuil, qu'on peut choisir nul).

Le troisième mode de réalisation est décrit en relation avec les figures 4 à 6.

Les éléments 1 à 14 du dispositif de commande 1 du troisième mode de réalisation ont déjà été décrits en relation avec la figure 3. Les éléments 100-102 du système de chauffage ont également déjà été décrits.

Comme illustré sur la figure 4, un signal à rapport cyclique modulé PMW (pour pulse width modulation, en anglais, soit modulation de largeur d'impulsions, ou MLI, en français), fonction de la température T1, est transmis depuis le microcontrôleur 4 jusqu'au module 5 via le coupleur 13.

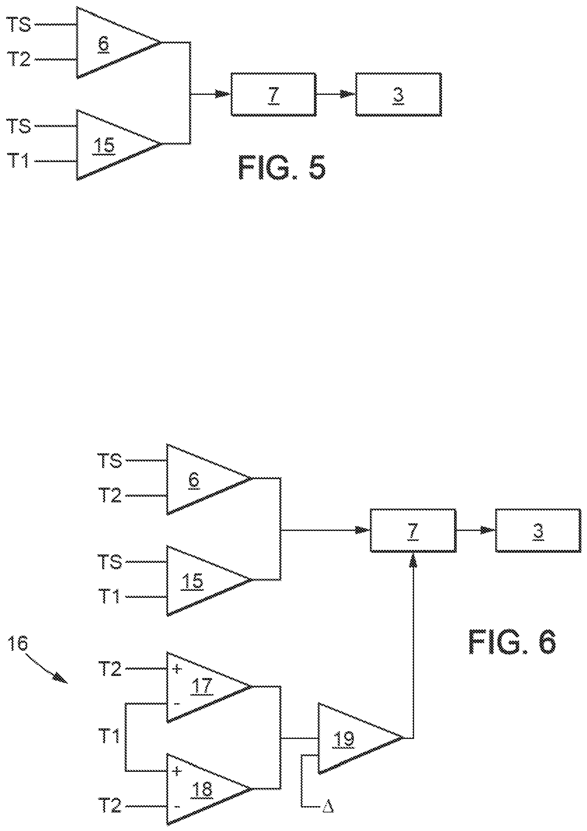

Sur la figure 5, le module 5 comprend, en plus du comparateur 6, un comparateur 15 agencé pour comparer la première température T1, grâce au signal PWM. Le comparateur 15 est connecté au moyen de commande 7 de la grille du transistor 3, de sorte que le deuxième transistor 3 est ouvert si T1 est supérieure au seuil ou si T2 est supérieure au seuil.

Sur la figure 6, le module 5 comprend, en plus des comparateurs 6 et 15, un moyen 16 de comparaison des températures T1 et T2, connecté au moyen de commande 7 de la grille du transistor 3, de sorte que le deuxième transistor 3 est ouvert si les températures T1 et T2 diffèrent d'un seuil, qu'on peut choisir nul.

Comme visible sur la figure 6, le moyen 16 comprend un premier soustracteur 17, un deuxième soustracteur 18 et un comparateur 19.

Le premier soustracteur 17 a pour entrée positive le signal T1 et pour entrée négative le signal T2, tandis que le deuxième soustracteur a pour entrée positive le signal T2 et pour entrée négative le signal T1, ce qui permet de comparer dans le comparateur 19 la différence entre les deux températures à la valeur seuil Δ.

Ainsi, selon cette variante, le moyen de commande 7 de la grille du transistor 3 ouvre le deuxième transistor 3 si :
- la température T1 est supérieure au seuil,
- la température T2 est supérieure au seuil, et/ou
- si les températures T1 et T2 diffèrent.

On note que le dispositif 1 comprend avantageusement, comme illustré sur les figures 1, 3 et 4, un coupleur numérique 20, alimenté par la source 11 et disposé entre le circuit basse tension 9 et le microcontrôleur 4, afin de communiquer d'autres informations pour le fonctionnement du dispositif de commande 1.

Ainsi, grâce à la présente invention, il est possible de détecter de façon fiable une défaillance au niveau des transistors de puissance, ce qui permet de préserver le système de chauffage associé et protéger les occupants du véhicule automobile équipé par le système.

## Revendications

1. Dispositif de commande d'un système de chauffage d'un fluide (F), de préférence un fluide liquide, pour un véhicule automobile, comprenant au moins un élément électrique chauffant (101) configuré pour chauffer le fluide (F) , le dispositif de commande (1) comprenant :
- un premier interrupteur électronique (2) apte à être connecté à l'élément électrique chauffant (101) et un deuxième interrupteur électronique (3) apte à être connecté à l'élément électrique chauffant (101), les premier et deuxième interrupteurs (2, 3) étant reliés en série à l'élément électrique chauffant (101),
- un capteur de mesure d'une première température (T1) et un microcontrôleur (4) associés au premier interrupteur électronique (2), le microcontrôleur (4) étant configuré pour ouvrir ou fermer le premier interrupteur (2) selon la valeur de première température mesurée (T1),
- un capteur de mesure d'une deuxième température (T2) et un module de contrôle logique (5) associés au deuxième interrupteur électronique (3) et comprenant un comparateur (6) agencé pour comparer la deuxième température mesurée (T2) à un seuil, le module (5) étant configuré pour ouvrir ou fermer le deuxième interrupteur (3) selon le résultat de la comparaison,
dans lequel, le dispositif de commande (1) comprend également un coupleur numérique (13) entre le microcontrôleur (4) et le module de contrôle logique (5), le coupleur numérique (13) assurant la communication entre le microcontrôleur (4) et le module de contrôle logique (5), le dispositif de commande étant **caractérisé en ce que** le microcontrôleur (4) est configuré pour piloter l'activation du deuxième interrupteur (3) via le module de contrôle logique (5).

2. Dispositif selon la revendication précédente, dans lequel le module (5) est configuré pour ouvrir le deuxième interrupteur électronique (3) si la deuxième température (T2) est supérieure à un seuil.

3. Dispositif selon l'une des revendications précédentes, dans lequel le coupleur numérique (13) est configuré pour communiquer la deuxième température mesurée (T2) au microcontrôleur (4).

4. Dispositif selon la revendication précédente, dans lequel le microcontrôleur (4) est configuré pour ouvrir le premier interrupteur électronique (2) si une valeur absolue d'une différence entre les valeurs des première et deuxième températures mesurées est supérieure à un seuil.

5. Dispositif selon l'une des revendications précédentes, dans lequel le module de contrôle logique (5) comprend un autre comparateur (15) pour comparer la première température (T1) à une valeur seuil, et étant configuré pour ouvrir le deuxième interrupteur électronique (3) si la première température (T1) est supérieure à un seuil.

6. Dispositif selon la revendication précédente, dans lequel le module de contrôle logique (5) comprend un moyen (16) de cohérence des première et deuxième températures (T1, T2) configuré pour ouvrir le deuxième interrupteur électronique (3) si la première température est différente de la deuxième température.

7. Dispositif selon l'une des revendications précédentes, comprenant une alimentation à découpage (12).

8. Système de chauffage d'un fluide, notamment liquide, comprenant un élément électrique chauffant (101) et un dispositif de commande selon l'une des revendications précédentes.

## Patentansprüche

1. Vorrichtung zur Steuerung eines Systems zum Erhitzen eines Fluids(F), bevorzugt eines flüssigen Fluids, für ein Kraftfahrzeug, umfassend mindestens ein elektrisches Heizelement (101), das dazu ausgestaltet ist, das Fluid (F) zu erhitzen, wobei die Vorrichtung zur Steuerung (1) umfasst:
- einen ersten elektronischen Schalter (2), der geeignet ist, an das elektrische Heizelement (101) angeschlossen zu werden, und einen zweiten elektronischen Schalter (3), der geeignet ist, an das elektrische Heizelement (101) angeschlossen zu werden, wobei die ersten und zweiten Schalter (2, 3) in Reihe mit dem elektrischen Heizelement (101) verbunden sind,
- einen Sensor zum Messen einer ersten Temperatur (T1) und einen Mikrocontroller (4), die dem ersten elektronischen Schalter (2) zugeordnet sind, wobei der Mikrocontroller (4) dazu ausgestaltet ist, den ersten Schalter (2) entsprechend dem Wert der ersten Temperatur (T1) zu öffnen oder zu schließen,
- einen Sensor zum Messen einer zweiten Temperatur (T2) und ein Kontroll-Logikmodul (5), die dem zweiten elektronischen Schalter (3) zugeordnet sind und einen Komparator (6) umfassen, der dazu ausgebildet ist, die zweite gemessene Temperatur (T2) mit einem Schwellenwert zu vergleichen, wobei das Modul (5) dazu ausgestaltet ist, den zweiten Schalter (3) entsprechend dem Ergebnis des Vergleichs zu öffnen oder zu schließen,
wobei die Vorrichtung zur Steuerung (1) auch einen digitalen Koppler (13) zwischen dem Mikrocontroller (4) und dem Kontroll-Logikmodul (5) umfasst, wobei der digitale Koppler (13) die Kommunikation zwischen dem Mikrocontroller (4) und dem Kontroll-Logikmodul (5) gewährleistet, wobei die Vorrichtung zur Steuerung **dadurch gekennzeichnet ist, dass** der Mikrocontroller (4) dazu ausgestaltet ist, die Aktivierung des zweiten Schalters (3) über das Kontroll-Logikmodul (5) anzusteuern.

2. Vorrichtung nach dem vorhergehenden Anspruch, wobei das Modul (5) dazu ausgestaltet ist, den zweiten elektronischen Schalter (3) zu öffnen, wenn die zweite Temperatur (T2) über einem Schwellenwert liegt.

3. Vorrichtung nach einem der vorstehenden Ansprüche, wobei der digitale Koppler (13) so konfiguriert ist, dass er die zweite gemessene Temperatur (T2) an den Mikrocontroller (4) übermittelt.

4. Vorrichtung nach dem vorhergehenden Anspruch, wobei der Mikrocontroller (4) dazu ausgestaltet ist, den ersten elektronischen Schalter (2) zu öffnen, wenn ein absoluter Wert einer Differenz zwischen den Werten der ersten und zweiten gemessenen Temperaturen über einem Schwellenwert liegt.

5. Vorrichtung nach einem der vorhergehenden Ansprüche, wobei das Kontroll-Logikmodul (5) einen weiteren Komparator (15) umfasst, um die erste Temperatur (T1) mit einem Schwellenwert zu vergleichen, und dazu ausgestaltet ist, den zweiten elektronischen Schalter (3) zu öffnen, wenn die erste Temperatur (T1) über einem Schwellenwert liegt.

6. Vorrichtung nach dem vorhergehenden Anspruch, wobei das Kontroll-Logikmodul (5) ein Kohärenzmittel (16) für die ersten und zweiten Temperaturen (T1, T2) umfasst, das dazu ausgestaltet ist, den zweiten elektronischen Schalter (3) zu öffnen, wenn die erste Temperatur von der zweiten Temperatur verschieden ist.

7. Vorrichtung nach einem der vorhergehenden Ansprüche, umfassend ein Schaltnetzteil (12).

8. System zum Erhitzen eines, insbesondere flüssigen, Fluids, umfassend ein elektrisches Heizelement (101) und eine Vorrichtung zur Steuerung nach einem der vorhergehenden Ansprüche.

## Claims

1. Device for controlling a system for heating a fluid (F), preferably a liquid fluid, for a motor vehicle, comprising at least one electric heating element (101) configured to heat the fluid (F), the control device (1) comprising:
- a first electronic switch (2) capable of being connected to the electric heating element (101) and a second electronic switch (3) capable of being connected to the electric heating element (101), the first and second switches (2, 3) being connected in series to the electric heating element (101),
- a sensor for measuring a first temperature (T1) and a microcontroller (4) associated with the first electronic switch (2), the microcontroller (4) being configured to open or close the first switch (2) depending on the measured value of the first temperature (T1),
- a sensor for measuring a second temperature (T2) and a logic control module (5) associated with the second electronic switch (3) and comprising a comparator (6) arranged to compare the measured second temperature (T2) with a threshold, the module (5) being configured to open or close the second switch (3) depending on the result of the comparison,
the control device (1) also comprising a digital coupler (13) between the microcontroller (4) and the logic control module (5), the digital coupler (13) ensuring communication between the microcontroller (4) and the logic control module (5), the control device being **characterized in that** the microcontroller (4) is configured to control activation of the second switch (3) via the logic control module (5).

2. Device according to the preceding claim, wherein the module (5) is configured to open the second electronic switch (3) if the second temperature (T2) is greater than a threshold.

3. Device according to one of the preceding claims, wherein the digital coupler (13) is configured to communicate the measured second temperature (T2) to the microcontroller (4).

4. Device according to the preceding claim, wherein the microcontroller (4) is configured to open the first electronic switch (2) if an absolute value of a difference between the values of the measured first and second temperatures is greater than a threshold.

5. Device according to one of the preceding claims, wherein the logic control module (5) comprises another comparator (15) for comparing the first temperature (T1) with a threshold value, and being configured to open the second electronic switch (3) if the first temperature (T1) is greater than a threshold.

6. Device according to the preceding claim, wherein the logic control module (5) comprises a means (16) for checking the consistency of the first and second temperatures (T1, T2), configured to open the second electronic switch (3) if the first temperature is different from the second temperature.

7. Device according to one of the preceding claims, comprising a switched-mode power supply (12).

8. System for heating a fluid, in particular a liquid, comprising an electric heating element (101) and a control device according to one of the preceding claims.
